# EUROPEAN PATENT APPLICATION

(11) **EP 2 098 358 A1**
(43) Date of publication of application: **09.09.2009**
(21) Application number: 08102210.5
(22) Date of filing: 03.03.2008
(51) Int. Cl.: B29C 70/30, B29C 33/42

(54) **Structural panel for engineering applications and method for manufacturig such a structural panel**

(71) Applicant: Technische Universiteit Delft, 2628 CN Delft (NL)
(72) Inventor: Gürdal, Zafer, 2629 HS Delft (NL); Vasiliev, Valery, 113545 Moscow (RU)
(74) Representative: Van Breda, Jacobus

(57) **Abstract**

The invention relates to a structural panel comprising a core of fibre material and outer layers on opposite sides of the core, wherein the core of fibre material is received in preshaped grooves provided in one outer layer's surface, the remaining area in said grooves being completely filled with resin material so as to avoid any air remaining in said grooves.

## Description

The invention relates to a structural panel, comprising a core of fibre material and outer layers on opposite sides of the core.

Such a structural panel is disclosed in US-A-5,993,941.

The known structural panel comprises a cellular ribbed structure of intersecting rectilinear ribs that are provided between two outer layers. The outer layers comprise a net of intersecting small composite belts oriented along the oppositely angled directions of the rectilinear ribs and intersect at the cross intersections of said rectilinear ribs. The structural panel of this known construction may be used in airborne vehicles, particularly in an airborne vehicle wing. It is however unsuited for application in a fuselage since such an application not only imposes load bearing properties but also requires resistance against pressure loads from within the aeroplane and capability to withstand external loads.

It is one object of the invention to provide an alternative to the known structural panel. A further objective is to provide a structural panel which is suited for application as part of a fuselage, or for any other type of engineering application, such as the construction of ships or in civil engineering structures.

Still another objective is to provide such a structural panel which can be easily manufactured at reduced cost as compared to the known structural panel.

These and other objectives will become apparent from the following disclosure of the structural panel and its method of manufacturing according to the invention.

The structural panel of the invention and its method of manufacturing is characterized by one or more of the appended claims.

In a first aspect of the invention the structural panel is characterized in that the core of fibre material is received in pre-shaped grooves provided in one outer layer's surface, the remaining area in said grooves being completely filled with resin material so as to avoid any air remaining in said grooves.

One particular advantage hereof is that the outer layer with the grooves acts as a mould in which the core of fibre material and filling resin material is received. Herewith the application of tooling is avoided which substantially reduces the costs of manufacturing the structural panel of the invention.

The avoidance of any air remaining in the grooves has the benefit that the core of fibrous material is protected against outside humidity and other factors that may influence the mechanical properties of the fibrous material. It also protects against the possibility of galvanic corrosion, which may otherwise occur particularly in case the fibre material is selected to be metal fibres, or in case one of the outer layers is a metal layer.

Preferably, the outer layer that is provided with the grooves is embodied with gas sealing properties. In connection therewith the other outer layer only has to provide a smooth outer surface sealing off the grooves. It may therefore be selected from the group comprising a surface coating such as a paint layer, a thermoplastic material layer, a thermosetting layer, or a metal layer without any need to provide structural stiffness to the panel of the invention.

Effectively, the outer layer with the grooves is selected from the group comprising a thermoplastic layer and a metal layer whereas the fibre material preferably comprises fibres that are selected from the group comprising carbon fibres, glass fibres or metal fibres. The fibres are preferably substantially continuous.

Within the construction of the structural panel of the invention, the load bearing capacity of the structural panel is provided with the grid that is made from the core of fibres that are provided in the grooves of the outer layer. This grid of fibrous material is very tolerant to global damage, whereas the protection against local damage is provided by the said outer layer which also provides for the pressure containing function when the panel is used for the wall of a fuselage.

The strength of the grid made up of the core of fibrous material is further supported by the feature that the resin material filling the grooves is a thermosetting resin that is cured after its application in the grooves.

The structural panel of the invention is cost-effectively manufactured in a method that is characterized by the features that
- in a first step one outer layer is provided with grooves for receiving therein the core of fibre material
- in a second step resin material and fibrous material is placed into said grooves avoiding air inclusions
- in a third step the resin material is cured and a second outer layer is provided to seal off the grooves and to provide a smooth outer surface.

The second outer layer providing the smooth outer surface is attached to the core by for instance co-curing, bonding, fastening or by any other known technique.

The invention shall hereinafter be further elucidated with reference to an example of the structural panel according to the invention and with reference to the drawing.

In the drawing:

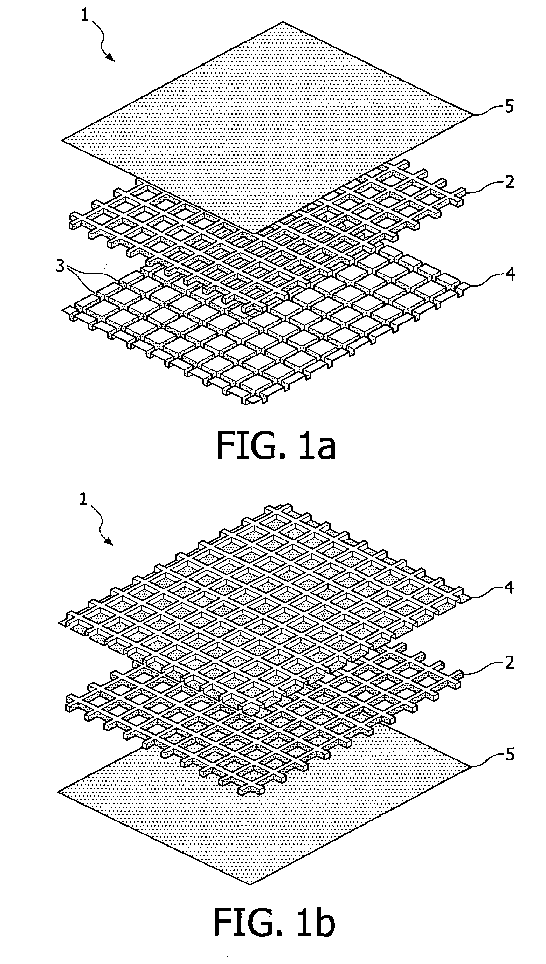

- Fig. 1a shows an exploded view of the structural panel of the invention;
- Fig. 1b shows the exploded view of Fig. 1a in reversed order and

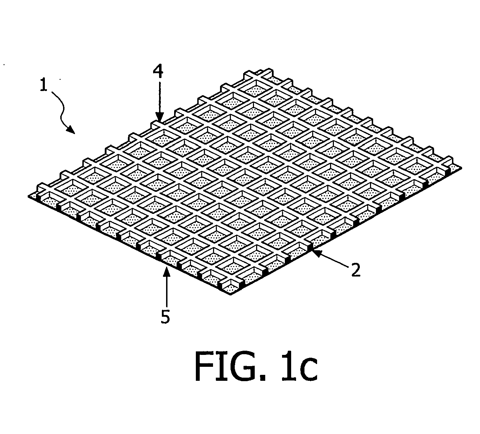

- Fig. 1c shows the structural panel as an assembly.

Wherever in the figures the same reference numerals are applied these relate to the same parts.

In the figures the structural panel of the invention is provided with reference numeral 1. This structural panel 1 comprises a core 2 of fibrous material shaped as a grid, which is received in pre-shaped grooves 3 that are provided in a first outer layer 4 which is intended as the internal skin of the fuselage of which the structural panel 1 will form a part. The panel of the invention may of course also be used in any other application.

The grid 2 of fibrous material is completed with a hardened resin material so as to cause that the grid 2 will completely fill the grooves 3 of the internal skin layer 4 leaving no room for any air in said grooves 3. The grid 2 as shown is shaped as a so-called ortho-grid wherein the crossing grooves are at an angle of 90°. Other angles are however also possible. It is also possible to have more than two grooves crossing each other.

The other outer layer 5 which is intended to function as the external skin must have a smooth outer surface and provides a seal to the grooves 3 wherein the grid 2 of fibrous material with resin is received.

The said outer layer 5 may depending on the circumstances and the requirements be selected from the group comprising a surface coating, a paint layer, a thermoplastic material layer, a thermosetting layer and a metal layer.

For the outer layer 4 having the grooves 3, a selection may be made from the group comprising a thermoplastic material layer and a metal layer. It may also be made of any other material that meets the concerning load requirements, in particular in relation to pressure containment when it concerns a fuselage-application. Also cost considerations are to be taken into account.

The fibrous material forming part of the grid 2 preferably has continuous fibers that are selected from the group comprising carbon fibers, glass fibers or metal fibers. After the said fibrous material of the grid 2 is completed with the resin material, said resin material is caused to be hardened by an appropriate curing treatment.

## Claims

1. Structural panel (1) comprising a core (2) of fibre material and outer layers (4,5) on opposite sides of the core (2), **characterized in that** the core (2) of fibre material is received in pre-shaped grooves provided in one outer layer's surface (4), the remaining area in said grooves (3) being completely filled with resin material so as to avoid any air remaining in said grooves (3).

2. Structural panel according to claim 1, **characterized in that** the outer layer (4) with the grooves (3) acts as a mould in which the core (2) of fibre material and filling resin material is received.

3. Structural panel according to claim 1 or 2, **characterized in that** the other outer layer (5) that is provided on the outer layer (4) that receives the core (2) of fibre material, provides a smooth seal to the grooves (3).

4. Structural panel according to claim 3, **characterized in that** the other outer layer (5) is selected from the group comprising a surface coating, a paint layer, a thermoplastic material layer, a thermosetting layer, a metal layer.

5. Structural panel according to any one of claims 1-4, **characterized in that** the outer layer (4) with the grooves (3) is selected from the group comprising a thermoplastic layer, a metal layer.

6. Structural panel according to anyone of claims 1-5, **characterized in that** the fibre material comprises fibres selected from the group comprising carbon fibres, glass fibres, metal fibres.

7. Structural panel according to claim 6, **characterized in that** the fibres are substantially continuous.

8. Structural panel according to anyone of claims 1-7, **characterized in that** the resin material filling the grooves (3) is a thermosetting resin that is cured after its application in the grooves (3).

9. Method of manufacturing a structural panel (1) for aeronautical application that comprises a core (2) of fibre material and outer layers (4,5) on opposite sides of the core (2),
**characterized in that**
- in a first step one outer layer (4) is provided with grooves (3) for receiving therein the core (2) of fibre material
- in a second step resin and fibrous material is placed into said grooves (3)
- in a third step the resin material is cured and a second outer layer (5) is provided to seal off the grooves (3) and to provide a smooth outer surface.
